# EUROPEAN PATENT APPLICATION

(11) **EP 4 693 343 A1**
(43) Date of publication of application: **11.02.2026**
(21) Application number: 23932011.2
(22) Date of filing: 05.04.2023
(51) Int. Cl.: H01B 7/02

(54) **RESIN COMPOSITION AND POWER CABLE**

(71) Applicant: Sumitomo Electric Industries, Ltd., Osaka-shi, Osaka 541-0041 (JP)
(72) Inventor: IYODA Fumitoshi, Osaka-shi, Osaka 541-0041 (JP); YAMASAKI Satoshi, Osaka-shi, Osaka 541-0041 (JP); YASUDA Shuhei, Osaka-shi, Osaka 541-0041 (JP)
(74) Representative: Grünecker Patent- und Rechtsanwälte PartG mbB
(86) International application number: PCT/JP2023/014125
(87) International publication number: WO 2024/209600

(57) **Abstract**

A resin composition forms an insulating layer of a power cable, and includes propylene units and styrene units. The resin composition includes: a sea phase having an elastic modulus of more than 100 MPa; a first island phase having an elastic modulus of 100 MPa or less and a size of 0.1 nm or more and 100 nm or less; and a second island phase having an elastic modulus of 100 MPa or less and a size of more than 100 nm and 2000 nm or less, in a distribution of elastic modulus of the resin composition obtained by a micro-region elasticity measurement using a scanning probe microscope at 25°C.

## Description

### [Technical Field]

The present disclosure relates to a resin composition and a power cable.

### [Background Art]

Crosslinked polyethylene is excellent in an insulation, and therefore has been widely used as a resin component constituting an insulating layer in a power cable and the like (e.g., PTL. 1).

### [Citation List]

### [Patent Literature]

PTL. 1: Japanese Laid-Open Patent Publication No. S57-69611

### [Summary of Invention]

### [Solution to Problem]

According to an aspect of the present disclosure,
there is provided a resin composition forming an insulating layer of a power cable,
the resin composition including propylene units and styrene units,
wherein in a distribution of elastic modulus of the resin composition obtained by a micro-region elasticity measurement using a scanning probe microscope at 25°C, the resin composition includes:
   a sea phase having an elastic modulus of more than 100 MPa;
   a first island phase having an elastic modulus of 100 MPa or less and a size of 0.1 nm or more and 100 nm or less; and
   a second island phase having an elastic modulus of 100 MPa or less and a size of more than 100 nm and 2000 nm or less.

### [Brief Description of Drawings]

[FIG. 1]

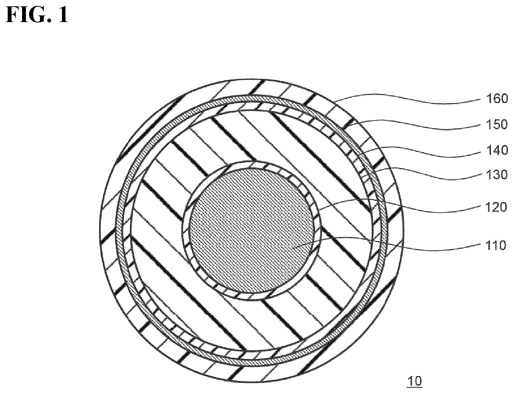

   FIG. 1 is a schematic cross-sectional view orthogonal to an axial direction of a power cable according to an embodiment of the present disclosure.
[FIG. 2]

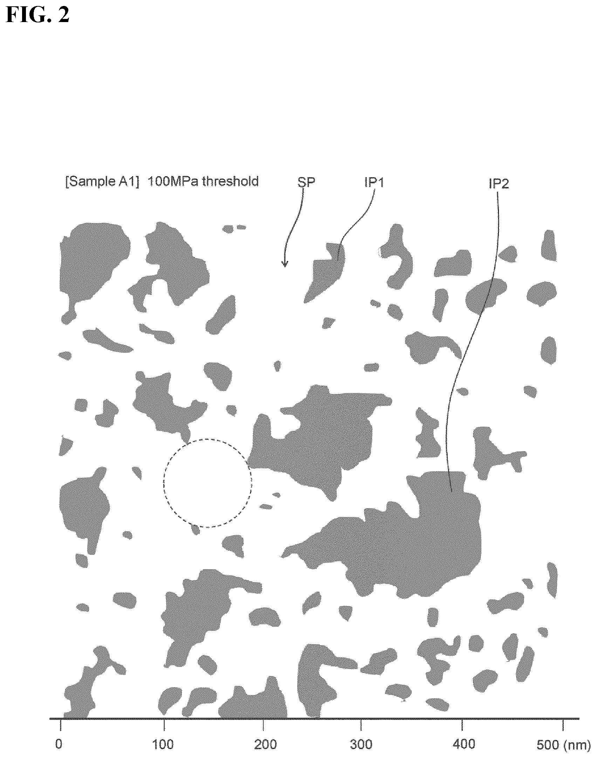

   FIG. 2 is a distribution of elastic modulus of Sample A1 obtained by a micro-region elasticity measurement using a scanning probe microscope at 25°C.
[FIG. 3]

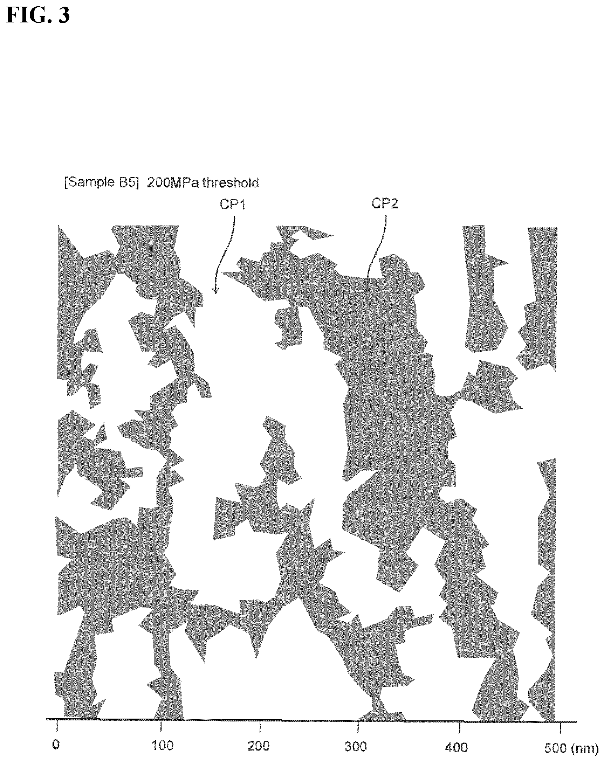

   FIG. 3 is a distribution of elastic modulus of Sample B5 obtained by a micro-region elasticity measurement using a scanning probe microscope at 25°C.
[FIG. 4]

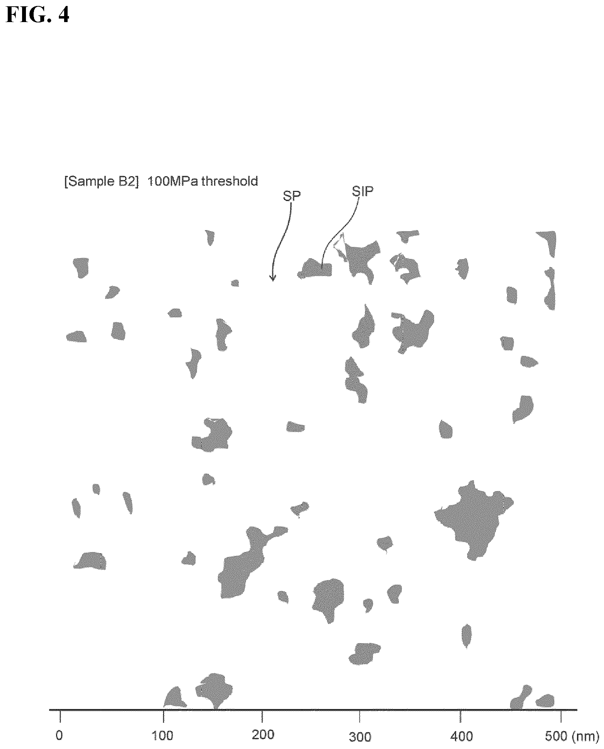

   FIG. 4 is a distribution of elastic modulus of Sample B2 obtained by a micro-region elasticity measurement using a scanning probe microscope at 25°C.
[FIG. 5]

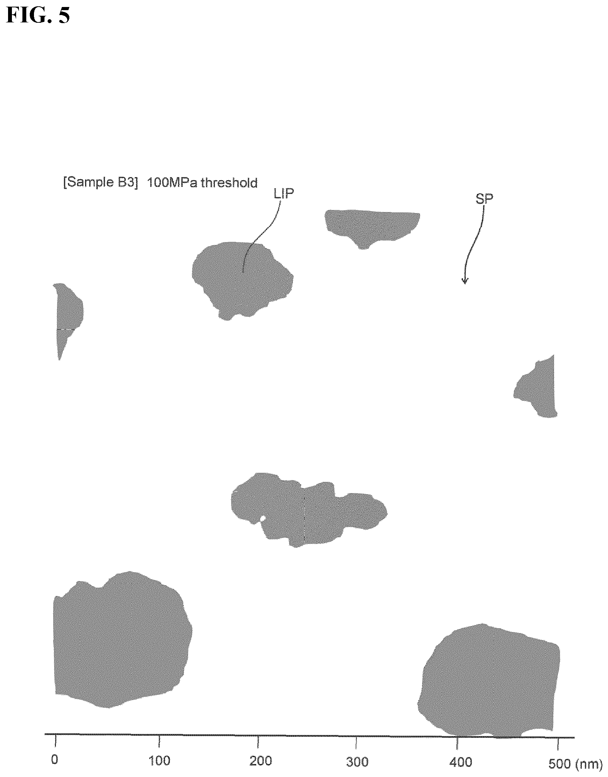

   FIG. 5 is a distribution of elastic modulus of Sample B3 obtained by a micro-region elasticity measurement using a scanning probe microscope at 25°C.
[FIG. 6]

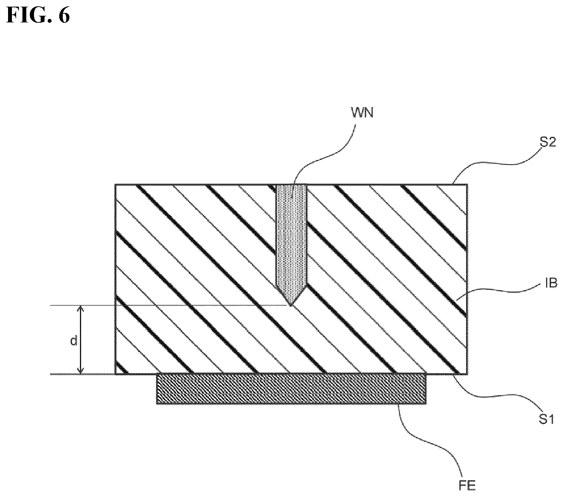

   FIG. 6 is a schematic cross-sectional view illustrating a water needle test.

### [Description of Embodiments]

### [Problem to be Solved by the Disclosure]

The present inventors have focused on a propylene-based resin (polypropylene) as a resin component that forms an insulating layer, and studied intensively to improve properties of a power cable.

An object of the present disclosure is to suppress the generation of the water trees originating from minute foreign matters or fine voids in an insulating layer while ensuring the bending resistance of the insulating layer.

### [Advantageous Effect of the Disclosure]

According to the present disclosure, the generation of the water trees originating from minute foreign matters or fine voids in the insulating layer can be suppressed while ensuring the bending resistance of the insulating layer.

### [Description of the Embodiment of the Disclosure]

### <Knowledges Obtained by the Inventors>

First, an outline of the knowledges obtained by the present inventors will be described.

The propylene-based resin itself has a large amount of crystals and tends to be hard.

Therefore, to control the crystallinity of a propylene-based resin, and to improve the flexibility of an insulating layer of a power cable, the present inventors tried mixing a propylene-based resin and a low crystalline resin as resin components forming the insulating layer.

However, the present inventors have found the following new problems in the insulating layer including the propylene-based resin and the low crystalline resin.

### (Water Tree Originating from Minute Foreign Matter or Fine Void)

In the conventional water tree test, an electric field was applied to the insulating layer in a state where the power cable was immersed in water. In the water tree test, water pressure was evenly applied to the insulating layer and an electric field was evenly applied to the insulating layer.

However, it has been found that even for a power cable in which no water tree is generated during the water tree test mentioned above, when minute foreign matters or fine voids get mixed into the insulating layer, the water tree resistance of the insulating layer may be reduced depending on the phase structure of the insulating layer as described below.
(i) In a case where the phase structure of the insulating layer is a co-continuous structure, when minute foreign matters or fine voids get mixed into the insulating layer, the minute foreign matters or fine voids may be incorporated into the relatively flexible phase including a low crystalline resin (hereinafter also referred to as a flexible phase) in the co-continuous structure. In this case, when water trees originating from minute foreign matters or fine voids are generated, the water trees can easily propagate along the flexible phase of the co-continuous structure.
(ii) When the phase structure of the insulating layer is a sea-island structure which includes a sea phase, and only a small island phase having a size of 100 nm or less as a flexible phase, coarse crystals grow in the sea phase including the propylene-based resin. Therefore, when the minute foreign matters or fine voids get mixed in the insulating layer, the water trees can easily propagate at the interface of the coarse crystals.

### (Degradation in Insulation during Bending)

Conventionally, in order to evaluate the insulation of an insulating layer, for example, an AC breakdown electric field strength has been measured. The measurement was carried out on a sheet taken from an insulating layer of a power cable immediately after production, without applying any particular stress.

However, it was found that in the above-mentioned measurement, even an ordinary power cable with a high AC breakdown electric field strength exhibits a degradation in the AC breakdown electric field strength when the power cable is bent. Specifically, it is found that the bending resistance of an insulating layer may degrade depending on the phase structure of the insulating layer as described below.

(iii) When the phase structure of the insulating layer is a sea-island structure which includes a sea phase, and only a large island phase having a size of more than 100 nm as a flexible phase, the elasticity of the sea phase including the propylene-based resin is maintained at a high level. For this reason, when the power cable is bent, cracks occur or the crystals separate from each other, in the sea phase. Therefore, the insulation of the insulating layer may be degraded.

Accordingly, the present inventors have studied intensively on the new problems mentioned above, and as a result, have succeeded in suppressing the generation of the water trees originating from the minute foreign matters or fine voids in the insulating layer while ensuring the bending resistance of the insulating layer by optimization of the phase structure of the insulating layer.

The present disclosure is based on the above-mentioned knowledges found by the inventors.

### <Embodiments of Disclosure>

Next, embodiments of the present disclosure will be listed and described.
[1] A resin composition according to an aspect of the present invention is a resin composition forming an insulating layer of a power cable,
   the resin composition including propylene units and styrene units,
   wherein in a distribution of elastic modulus of the resin composition obtained by a micro-region elasticity measurement using a scanning probe microscope at 25°C, the resin composition includes:
      a sea phase having an elastic modulus of more than 100 MPa;
      a first island phase having an elastic modulus of 100 MPa or less and a size of 0.1 nm or more and 100 nm or less; and
      a second island phase having an elastic modulus of 100 MPa or less and a size of more than 100 nm and 2000 nm or less.
   According to this configuration, optimization of the phase structure of the insulating layer can suppress the generation of the water trees originating from minute foreign matters or fine voids in the insulating layer while ensuring the bending resistance of the insulating layer.
[2] The power cable according to an aspect of the present disclosure includes:
   a conductor; and
   an insulating layer provided to cover an outer circumference of the conductor,
      the insulating layer including propylene units and styrene units,
   wherein in a distribution of elastic modulus of the insulating layer obtained by a micro-region elasticity measurement using a scanning probe microscope at 25°C, the insulating layer incudes:
      a sea phase having an elastic modulus of more than 100 MPa;
      a first island phase having an elastic modulus of 100 MPa or less and a size of 0.1 nm or more and 100 nm or less; and
      a second island phase having an elastic modulus of 100 MPa or less and a size of more than 100 nm and 2000 nm or less.
   According to this configuration, optimization of the phase structure of the insulating layer can suppress the generation of the water trees originating from minute foreign matters or fine voids in the insulating layer while ensuring the bending resistance of the insulating layer.
[3] In the power cable described above in [2],
   a maximum length of water tree in the insulating layer generated by a water needle test is 200 µm or less,
   the water needle test including:
      providing a flat-plate electrode on a first surface of a block taken from the insulating layer;
      forming a void with a needle shape to have a tip with a radius of curvature of 10 µm at a position opposite to and at a distance of 1 mm from the first surface;
      forming a water needle in the block by injecting artificial seawater at a salt concentration of 3.8 mass% into the void; and
      applying an AC voltage of 1000 Hz and 4 kV between the flat-plate electrode and the tip of the water needle for 200 hours.
   According to this configuration, even when minute foreign matters or fine voids get mixed in the insulating layer, extreme propagation of the water tree can be suppressed.
[4] In the power cable described above in [2] or [3],
   an AC breakdown electric field strength in the insulating layer is 50 kV/mm or more at 25°C after a bending test as predetermined,
   the bending test including:
      a first step of bending the power cable to yield a bending ratio of a bending radius of the power cable relative to an outer diameter of the insulating layer being 7 or less; and
      a second step of bending the power cable in a direction opposite to a bending direction in the first step at the same bending ratio as the bending ratio in the first step.
   According to this configuration, even when the power cable is bent, the insulation of the insulating layer can be maintained high.
[5] In the power cable described above in any one of [2] to [4],
   the insulating layer further includes butene units, and
   a content of the butene units in the insulating layer is 9 mass% or more and less than 20 mass%.
   According to this configuration, the above-mentioned sea-island structure can be stably formed.
[6] In the power cable described above in any one of [2] to [5],
   the insulating layer includes:
   a propylene-based resin;
   a first styrene-based elastomer including propylene units or butene units, and styrene units; and
   a second styrene-based elastomer including propylene units or butene units, and styrene units, and different from the first styrene-based elastomer.
   According to this configuration, two island phases different in size from each other can be stably formed.

### [Details of Embodiment of Disclosure]

Next, an embodiment of the present disclosure will be described below with reference to the drawings. The present disclosure is not limited to these illustrations, but intended to be indicated by claims and encompass all the changes which fall within the meaning and scope equivalent to claims.

### <One Embodiment of Disclosure>

### (1) Resin Composition

The resin composition of this embodiment, for example, forms the insulating layer 130 of the power cable 10 described later.

The resin composition of this embodiment contains, for example, a propylene-based resin and a low crystalline resin as resin components. A "resin component" here refers to a resin material (polymer) constituting a main component of the resin composition. A "main component" refers to a component in the highest content.

Mixing the propylene-based resin and the low crystalline resin can inhibit excessive crystal growth of the propylene-based resin and improve the flexibility of the insulating layer 130.

### (Propylene-based Resin)

The propylene-based resin of this embodiment constitutes the main component of the insulating layer, and contains at least propylene units as a main chain. Examples of the propylene-based resin include homopolypropylene (homo PP), random polypropylene (random PP), and block polypropylene (block PP).

By analyzing the resin composition of this embodiment with a nuclear magnetic resonance (NMR) system, for example, when the propylene-based resin is random PP or block PP, propylene units and ethylene units are detected. When the propylene-based resin is homo PP, propylene units are detected.

From a viewpoint of obtaining high insulation in the insulating layer 130, the propylene-based resin may be the random PP. Compared to the random PP, the homo PP has a higher crystal amount and provides higher insulation, but may cause inter- or intra-crystalline cracking in the insulating layer 130 including the homo PP. Therefore, the homo PP may fail to provide inherent insulation. In contrast, the random PP includes ethylene units, and therefore has a lower crystal amount. However, in the insulating layer 130 including the random PP, cracking due to coarse crystallization is less likely to occur. As a result, the random PP can provide higher insulation compared to the homo PP.

When the propylene-based resin is the random PP, the content of the ethylene units in the random PP may be, for example, 0.5 mass% or more and 15 mass% or less. The growth of coarse spherulites can be suppressed by setting the content of the ethylene units to 0.5 mass% or more. On the other hand, by setting the content of the ethylene units to 15 mass% or less, it is possible to suppress reduction in melting points and to stably realize use under non-crosslinking or slight crosslinking.

In this embodiment, the tacticity of the propylene is not particularly limited, but may be isotactic, for example. Isotactic polypropylene is a polymerization product using a Ziegler-Natta catalyst and is versatile. Since the tacticity is isotactic, reduction in the melting point can be suppressed in the composition obtained by mixing the propylene-based resin and low crystalline resin. Thus, the high insulation inherent to the propylene-based resin can be obtained.

In this embodiment, the storage modulus of the propylene-based resin itself is, for example, 300 MPa or more and 2500 MPa or less.

The "storage modulus" referred to here is measured by dynamic mechanical analysis (DMA) in accordance with JIS K7244-4: 1999.

The dynamic viscoelasticity measurement is performed under the following conditions.

### Measurement mode: stretching mode

Strain: 0.08%
Frequency: 10 Hz
Temperature range: 0°C or more and 200°C or less
Temperature rising rate: 10 °C /min

The "storage modulus" mentioned above is a value measured at 25°C by the dynamic viscoelasticity measurement.

By setting the storage modulus of the propylene-based resin itself to 300 MPa or more, the rigidity of the insulating layer 130 can be ensured. On the other hand, by setting the storage modulus of the propylene-based resin itself to 2500 MPa or less, the flexibility of the insulating layer 130 can be ensured.

The melt flow rate (MFR) of the propylene-based resin is not particularly limited. However, the MFR of the propylene-based resin may be, for example, 0.1 g/10 min or more and 10.0 g/10 min or less, or 0.1 g/10 min or more and 5.0 g/10 min or less. The "MFR" referred to here is a value measured in accordance with JIS K7210 at a temperature of 230°C with a load of 2.16 kg. By setting the MFR of the propylene-based resin within the above range, a sea-island structure, which will be described later, can be easily formed in the insulating layer 130.

The melting point of the propylene-based resin is not particularly limited, but the melting point of the propylene-based resin may be, for example, 130°C or more and 165°C or less. Accordingly, a sea-island structure described below can be easily formed when the propylene-based resin and the low crystalline resin are mixed.

### (Low Crystalline Resin)

The low crystalline resin of this embodiment is configured to control the crystallinity of the propylene-based resin and to impart flexibility to the insulating layer. For example, the low crystalline resin has no melting point, or the melting point of the low crystalline resin is less than 100°C. A heat of fusion of the low crystalline resin is, for example, 50 J/g or less, or may be 30 J/g or less.

The low crystalline resin of this embodiment is, for example, a styrene-based elastomer. The styrene-based elastomer can form an island phase described below.

The styrene-based elastomer as the low crystalline resin contains styrene units as a hard segment, and at least propylene units or butene units as a soft segment. The styrene-based elastomer may contain as other soft segment at least one type of monomer units selected from the group consisting of ethylene units and isoprene units, for example.

Examples of the styrene-based elastomer include styrene-butadiene-styrene block copolymer (SBS), hydrogenated styrene-butadiene-styrene block copolymer, styrene-ethylene-propylene copolymer (SEP), styrene-isoprene-styrene copolymer (SIS), hydrogenated styrene-isoprene-styrene copolymer, hydrogenated styrene-butadiene rubber, hydrogenated styrene-isoprene rubber, and styrene-ethylene-butene-olefin crystalline block copolymer. Two or more of them may be used in combination.

The term "hydrogenated" referred to here means hydrogen being added to a double bond. For example, "hydrogenated styrene-butadiene-styrene block copolymer" means a polymer obtained by adding hydrogen to double bonds of the styrene-butadiene-styrene block copolymer. Note that double bonds in the aromatic ring included in styrene has no hydrogen added thereto. The term "hydrogenated styrene-butadiene-styrene block copolymer" can be also referred to as styrene-ethylene-butene-styrene block copolymer (SEBS).

Among the styrene-based elastomers, hydrogenated materials having no double bonds in their chemical structures excluding aromatic rings may be used. When non-hydrogenated materials are used, the resin component may be thermally deteriorated, for example, at the time of molding of the resin composition, which may degrade the properties of the resulting molded body. In contrast, the use of the hydrogenated material can improve resistance to the thermal deterioration. As a result, the properties of the molded body can be maintained at a higher level.

In this embodiment, the resin composition includes, as the low crystalline resins, two styrene-based elastomers (a first styrene-based elastomer and a second styrene-based elastomer). The first styrene-based elastomer contains propylene units or butene units, and styrene units. The second styrene-based elastomer contains propylene units or butene units, and styrene units, and different from the first styrene-based elastomer. A content of at least one type of monomer units in the second styrene-based elastomer is different from a content of at least one type of monomer units in the first styrene-based elastomer. Thus, two island phases which are different in size from each other can be stably formed in the insulating layer 130.

The content of the propylene units or butene units in the second styrene-based elastomer is less than the content of the propylene units or butene units in the first styrene-based elastomer. In the second styrene-based elastomer, since the content of the propylene units or butene units, which have good compatibility with the propylene-based resin, is relatively less, the second styrene-based elastomer can be allowed to aggregate, forming a large island phase (second island phase described below) containing the second styrene-based elastomer. On the other hand, in the first styrene-based elastomer, since the content of the propylene units or butene units is relatively more, the first styrene-based elastomer can be finely dispersed to form a small island phase (first island phase described below) containing the first styrene-based elastomer.

Specifically, the content of the propylene units or butene units in the first styrene-based elastomer is 40 mass% or more and 80 mass% or less, for example. By setting the content of the propylene units or butene units in the first styrene-based elastomer to 40 mass% or more, the first styrene-based elastomer can be finely dispersed. On the other hand, by setting the content of the propylene units or butene units in the first styrene-based elastomer to 80 mass% or less, the rigidity of the insulating layer 130 can be ensured.

On the other hand, the content of the butene units in the second styrene-based elastomer is, for example, 5 mass% or more and less than 40 mass%. By setting the content of the propylene units or butene units in the second styrene-based elastomer to 5 mass% or more, the flexibility of the insulating layer 130 can be ensured. On the other hand, by setting the content of the propylene units or butene units in the second styrene-based elastomer to less than 40 mass%, the second styrene-based elastomer is allowed to aggregate to stably form a large island phase (second island phase described below) containing the second styrene-based elastomer.

For example, the content of the styrene units in the second styrene-based elastomer is more than the content of the styrene units in the first styrene-based elastomer, which can make compatibility of the second styrene-based elastomer with the propylene-based resin less than the compatibility of the first styrene-based elastomer. As a result, an island phase containing the second styrene-based elastomer (second island phase described below) can be easily made larger than an island phase containing the first styrene-based elastomer (first island phase described below).

Specifically, the content of the styrene units in the first styrene-based elastomer is, for example, 20 mass% or less, or may be 10 mass% or less. By setting the content of the styrene units in the first styrene-based elastomer to 20 mass% or less, the first styrene-based elastomer can be finely dispersed. Further, by setting the content of the styrene units in the first styrene-based elastomer to 10 mass% or less, the insulating layer 130 can be efficiently flexibilized while finely dispersing the first styrene-based elastomer.

On the other hand, the content of the styrene units in the second styrene-based elastomer is, for example, more than 20 mass% and 70 mass% or less. By setting the content of the styrene units in the second styrene-based elastomer to more than 20 mass%, the second styrene-based elastomer can be allowed to aggregate. On the other hand, by setting the content of the styrene units in the second styrene-based elastomer to 70 mass% or less, the flexibility of the insulating layer 130 can be ensured.

In this embodiment, the storage modulus of the styrene-based elastomer itself is, for example, 0.1 MPa or more and 100 MPa or less. The method and conditions for measuring the "storage modulus of the styrene-based elastomer itself" referred to here are the same as those for measuring the storage modulus of the propylene-based resin described above. By setting the elastic modulus of the styrene-based elastomer itself to 0.1 MPa or more, the rigidity of the insulating layer 130 can be ensured. On the other hand, by setting the elastic modulus of the styrene-based elastomer itself to 400 MPa or less, the flexibility of the insulating layer 130 can be ensured.

The MFR of the styrene-based elastomer is not particularly limited. However, the MFR of the styrene-based elastomer may be, for example, 0.1 g/10 min or more and 30.0 g/10 min or less, or 0.1 g/10 min or more and 10.0 g/10 min or less. The conditions for measuring the MFR of the styrene-based elastomer herein are the same as those described for the MFR of the propylene-based resin. By setting the MFR of the styrene-based elastomer within the above-mentioned range, a sea-island structure, which will be described later, can be easily formed in the insulating layer 130.

### (Content of Monomer Units in Resin Composition)

The content of the monomer units in the resin composition (the insulating layer 130 described below) is measured with an NMR system. The total content of the monomer units in the resin component is taken as 100 mass%.

The content of the propylene units in the resin composition is, for example, more than 50 mass% and 80 mass% or less. The propylene-based resin phase can be formed as a sea phase throughout the entire insulating layer. Accordingly, the insulation of the propylene-based resin as the main component can be ensured while the insulating layer 130 is kept non-crosslinked. On the other hand, by setting the content of the propylene units to 80 mass% or less, the island phase containing the low crystalline resin can be ensured in the insulating layer 130. Accordingly, excessive crystal growth of the propylene-based resin can be suppressed.

In this embodiment, when the resin composition includes propylene units, butene units, and styrene units, the content of the butene units in the resin composition is, for example, 9 mass% or more and less than 20 mass%. Accordingly, the sea-island structure described below can be stably formed in the insulating layer 130. The phase structure will be described in more detail below.

In this embodiment, the content of the styrene units in the resin composition is, for example, 0.1 mass% or more and less than 15 mass%. By setting the content of the styrene units to 0.1 mass% or more, the insulation of the insulating layer 130 can be stabilized. On the other hand, by setting the content of the styrene units to less than 15 mass%, the flexibility of the insulating layer 130 can be ensured.

The resin composition may include, as monomer units other than the propylene units, butene units, and styrene units, for example, ethylene units derived from the propylene-based resin or the low crystalline resin.

In this embodiment, the content of each of the first styrene-based elastomer and the second styrene-based elastomer as the low crystalline resins in the resin composition is adjusted based on the content of the above-mentioned monomer units in the resin composition when the resin components are mixed.

### (Crosslinking Agent)

In this embodiment, the resin component forming the insulating layer 130 may be non-crosslinked from the viewpoint of recycling. In this case, the resin composition may contain no crosslinking agent.

On the other hand, the resin composition may contain a small amount of crosslinking agent to the extent that the gel fraction (degree of crosslinking) is low. Specifically, for example, the resin composition may contain a crosslinking agent to the extent that the residue of the crosslinking agent in the insulating layer 130 is less than 300 ppm. The term "residue (decomposition residue) of the crosslinking agent" referred to here means a decomposition product generated by decomposition of the crosslinking agent due to the crosslinking reaction. Note that when dicumyl peroxide is used as a crosslinking agent, examples of the residue include cumyl alcohol and α-methylstyrene.

### (Other Additives)

The resin composition may contain, for example, an antioxidant, a heat stabilizer, a copper inhibitor, a lubricant, and a coloring agent, in addition to the above-mentioned resin components.

The resin composition may contain no metal hydroxide which serves as a flame retardant. Alternatively, even when the resin composition contains a metal oxide, the content of the metal oxide in the resin composition may be 1 part by mass or less, taking the content of the resin component in the resin composition as 100 parts by mass. Thus, stable insulation of the insulating layer 130 can be obtained.

### (2) Power cable

Next, with reference to FIG. 1, the power cable of this embodiment will be described.

The power cable 10 of this embodiment is configured as a so-called solid insulation power cable. The power cable 10 of this embodiment is configured, for example, to be laid on the ground (in a pipeline), under water, or at the bottom of water. The power cable 10 may be used, for example, for alternating current or direct current.

Specifically, the power cable 10 includes, for example, a conductor 110, an internal semiconductive layer 120, an insulating layer 130, an external semiconductive layer 140, a shielding layer 150, and a sheath 160.

### (Conductor (Conductive Part))

The conductor 110 is configured by twisting together a plurality of conductor core wires (conductive core wires) including, for example, pure copper, copper alloy, aluminum, or aluminum alloy.

### (Internal Semiconductive Layer)

The internal semiconductive layer 120 is provided to cover the outer circumference of the conductor 110. In addition, the internal semiconductive layer 120 has semiconductivity and is configured to suppress electric field concentration on the surface of the conductor 110. The internal semiconductive layer 120 includes, for example, at least any one selected from the group consisting of ethylene-based copolymers such as ethylene-ethyl acrylate copolymers, ethylene-methyl acrylate copolymers, ethylene-butyl acrylate copolymers, and ethylene-vinyl acetate copolymers, olefinic elastomers, and the above-mentioned low crystalline resins, together with conductive carbon black.

### (Insulating Layer)

The insulating layer 130 is provided to cover the outer circumference of the internal semiconductive layer 120. For example, the insulating layer 130 is formed through extrusion molding using the resin composition, as mentioned above. The details of the phase structure of the insulating layer 130 and the cable properties will be described below.

### (External Semiconductive Layer)

The external semiconductive layer 140 is provided to cover the outer circumference of the insulating layer 130. In addition, the external semiconductive layer 140 has semiconductivity and is configured to suppress electric field concentration between the insulating layer 130 and the shielding layer 150. The external semiconductive layer 140 is formed by the same material as the internal semiconductive layer 120, for example.

### (Shielding Layer)

The shielding layer 150 is provided to cover the outer circumference of the external semiconductive layer 140. The shielding layer 150 is, for example, configured by winding a copper tape, or configured as a wire shield formed by winding a plurality of soft copper wires. A tape including rubberized cloth or the like as a raw material may be wound inside or outside the shielding layer 150.

### (Sheath)

The sheath 160 is provided to cover the outer circumference of the shielding layer 150. The sheath 160 is constituted by polyvinyl chloride or polyethylene, for example.

For an underwater cable or a subaqueous cable, the power cable 10 of this embodiment may have a metallic water shielding layer such as a so-called aluminum coat, or an iron wire armoring outside the shielding layer 150.

On the other hand, the power cable 10 of this embodiment does not have to include a water shielding layer outside the shielding layer 150, for example. That is, the power cable 10 of this embodiment may have an imperfect water shielding structure.

### (Specific Dimensions etc.)

Specific dimensions of the power cable 10 are not particularly limited. For example, the diameter of the conductor 110 is 5 mm or more and 60 mm or less, the thickness of the internal semiconductive layer 120 is 0.5 mm or more and 3 mm or less, the thickness of the insulating layer 130 is 3 mm or more and 35 mm or less, the thickness of the external semiconductive layer 140 is 0.5 mm or more and 3 mm or less, the thickness of the shielding layer 150 is 0.1 mm or more and 5 mm or less, and the thickness of the sheath 160 is 1 mm or more. The AC voltage applied to the power cable 10 of this embodiment is, for example, 20 kV or more.

### (3) Phase structure of insulating layer

The present inventors have discovered a phase structure of the insulating layer 130 that can solve the new problems mentioned above by performing the micro-region elasticity measurement on the insulating layer 130 that includes a resin composition.

The "micro-region elasticity measurement" referred to here is performed using a scanning probe microscope (SPM). In the measurement, for example, a sheet having a predetermined thickness, cut out from a central portion in the thickness direction of the insulating layer 130, is used. In the micro-region elasticity measurement, the elastic modulus is measured under conditions of tapping within a 1 µm square area of the sample 16000 times at 25°C with a cantilever having a tip that is made of silicon (single crystal) and has a radius of curvature of 1 nm or more and less than 20 nm, for example.

By such a micro-region elasticity measurement, the distribution of the elastic modulus in the insulating layer 130 can be obtained. Thus, it is possible to grasp the phase structure of the insulating layer 130 based on the distribution of the elastic modulus.

For example, by observing the distribution of the elastic modulus with the elastic modulus of 200 MPa as a threshold, it is possible to determine whether the phase structure of the insulating layer 130 is a co-continuous structure. Here, the propylene units or the butene units in the styrene-based elastomer are easily mixed with the propylene-based resin. The area where the styrene-based elastomer and the propylene-based resin are mixed has an intermediate elastic modulus between the elastic modulus of the propylene-based resin and the elastic modulus of the styrene-based resin, for example, an elastic modulus of 200 MPa or less. When such phases of 200 MPa or less are connected as a continuous phase, water trees easily extend through the phase. Therefore, by observing the distribution of the elastic modulus with the elastic modulus of 200 MPa as a threshold, it is possible to distinguish the co-continuous structure in which water trees easily extend.

Further, for example, by observing the distribution of the elastic modulus with the elastic modulus of 100 MPa as a threshold, it is possible to measure the size of the island phase when the phase structure of the insulating layer 130 is a sea-island structure. That is, since the styrene-based elastomer exhibits an elastic modulus of less than 100 MPa by the micro-region elasticity measurement, the size of the island phase derived from the styrene-based elastomer can be measured by observation with an elastic modulus of 100 MPa as a threshold.

In this embodiment, the insulating layer 130 includes, for example, a sea phase having an elastic modulus of more than 100 MPa; a first island phase having an elastic modulus of 100 MPa or less and a size of 0.1 nm or more and 100 nm or less; and a second island phase having an elastic modulus of 100 MPa or less and a size of more than 100 nm and 2000 nm or less, in a distribution of the elastic modulus of the insulating layer 130 obtained by a micro-region elasticity measurement using an SPM at 25°C.

In this embodiment, since the resin composition forming the insulating layer 130 satisfies, for example, the following requirements, the above-mentioned phase structure can be stably formed in the insulating layer 130:
(A) The resin composition includes a propylene-based resin, and two styrene-based elastomers as the low crystalline resins;
(B) When the resin composition includes propylene units, butene units, and styrene units, the content (mass% concentration) of the butene units in the resin composition is 9 mass% or more and less than 20 mass%; and
(C) The new mixing method described later is applied.

Hereinafter, the phase structure of the insulating layer 130 of this embodiment will be described with reference to FIG. 2 to FIG. 5. As an example, in a case where the resin composition forming the insulating layer 130 includes propylene units, butene units, and styrene units, the phase structure of the insulating layer 130 of this embodiment is compared with the phase structures of Reference Examples. FIG. 2 to FIG. 5 illustrate a distribution of the elastic modulus obtained by a micro-region elasticity measurement using an SPM at 25°C. In FIG. 2 to FIG. 5, the gray region indicates a region with elastic modulus equal to or less than the threshold described at the top of each figure.

### (Reference Example 1: Co-continuous Structure)

For example, in Reference Example 1, in which the content of the butene units in the resin composition is 20 mass% or more, regardless of whether the resin composition includes two styrene-based elastomers as low crystalline resins, the phase structure of the insulating layer 130 is a co-continuous structure as illustrated in FIG. 3.

As illustrated in the distribution of the elastic modulus in FIG. 3, the co-continuous structure of Reference Example 1 has, for example, a first continuous phase CP1 having an elastic modulus of more than 200 MPa and a second continuous phase CP2 having an elastic modulus of less than 200 MPa. The first continuous phase CP1 is derived from the propylene-based resin. The second continuous phase CP2 is mainly derived from the styrene-based elastomer as the low crystalline resin.

In the co-continuous structure, each of the first continuous phase CP1 and the second continuous phase CP2 is long and continuous. The length between both ends of the second continuous phase CP2 is, for example, 5 µm or more in the distribution of the elastic modulus with an elastic modulus of 200 MPa as a threshold. The "length between both ends of the second continuous phase CP2" used herein refers to a length of a straight line connecting a first end to a second end, which is farthest from the first end, of the second continuous phase CP2.

In a case where the phase structure of the insulating layer 130 is a co-continuous structure mentioned above, when minute foreign matters or fine voids get mixed into the insulating layer 130, the minute foreign matters or fine voids may be incorporated into the second continuous phase CP2 which includes the styrene-based elastomer and is flexible. In this case, when water trees originating from the minute foreign matters or fine voids are generated, the water trees easily propagate along the second continuous phase CP2.

### (Reference Example 2: Sea-Island Structure Including Only Small Island Phase)

For example, in Reference Example 2, in which the resin composition includes as the low crystalline resin only styrene-based elastomer with high content of the butene units, and the content of the butene units in the resin composition is less than 20 mass, the phase structure of the insulating layer 130 is a sea-island structure including only small island phase SIP as illustrated in FIG. 4.

As illustrated in the distribution of the elastic modulus in FIG. 4, the sea-island structure of Reference Example 2 has, for example, a sea phase SP having an elastic modulus of more than 100 MPa and a small island phase SIP having an elastic modulus of less than 100 MPa. The sea phase SP is derived from the propylene-based resin. The small island phase SIP is derived from the styrene-based elastomer as the low crystalline resin. The small island phase SIP has a size of 100 nm or less, for example.

When the phase structure of the insulating layer 130 is a sea-island structure which includes only a small island phase SIP as mentioned above, coarse crystals grow in the sea phase SP including the propylene-based resin. Therefore, when the minute foreign matters or fine voids get mixed in the insulating layer 130, water trees easily propagate at the interface of the coarse crystals.

### (Reference Example 3: Sea-Island Structure Including Only Large Island Phase)

For example, in Reference Example 3, in which the resin composition includes as the low crystalline resin only styrene-based elastomer with low content of the butene units, and the content of the butene units in the resin composition is less than 9 mass%, the phase structure of the insulating layer 130 is a sea-island structure including only large island phase LIP as illustrated in FIG. 5.

In the distribution of the elastic modulus illustrated in FIG. 5, the sea-island structure of Reference Example 3 has, for example, a sea phase SP having an elastic modulus of more than 100 MPa and a small island phase SIP having an elastic modulus of less than 100 MPa. The sea phase SP is derived from the propylene-based resin. The large island phase LIP is derived from the styrene-based elastomer as the low crystalline resin. The large island phase LIP has a size of more than 100 nm.

When the phase structure of the insulating layer 130 is a sea-island structure which includes only a large island phase LIP as mentioned above, the elasticity of the sea phase SP including the propylene-based resin is maintained high. As a result, when the power cable 100 is bent, cracks occur or the crystals separate from each other, in the sea phase SP. Therefore, insulation of the insulating layer 130 may be degraded.

In addition, for example, even when the resin composition forming the insulating layer 130 does not contain a styrene-based elastomer, or even when the resin composition forming the insulating layer 130 satisfies the above-mentioned (A) and (B) but does not satisfy (C), the phase structure of the insulating layer 130 will be a sea-island structure similar to that of Reference Example 3.

### (This Embodiment: Sea-Island Structure Having Two Island Phases Having Different Sizes)

In contrast, in this embodiment, since the resin composition forming the insulating layer 130 satisfies, for example, the following requirements (A), (B), and (C), the phase structure of the insulating layer 130 is, for example, a sea-island structure illustrated in FIG. 2.

That is, in this embodiment, (A) since the resin composition includes a propylene-based resin, and two styrene-based elastomers as the low crystalline resins, two island phases which are different in size from each other (first island phase IP1 and second island phase IP2) can be formed.

In this embodiment, (B) by setting the content of the butene units in the resin composition to 9 mass% or more, it is possible to ensure compatibility of each styrene-based elastomer with the propylene-based resin and suppress excessive aggregation of each styrene-based elastomer. Accordingly, the first island phase IP1 can be finely dispersed in the sea phase SP. Further, the excessive aggregation of the second island phase IP2 can be suppressed.

In this embodiment, (B) by setting the content of the butene units in the resin composition to less than 20 mass%, it is possible to suppress excessive compatibility of each styrene-based elastomer with the propylene-based resin. Accordingly, the formation of the co-continuous structure can be suppressed.

In this embodiment, by applying a novel mixing method described later, it is possible to apply a high shear strength to the resin composition and to ensure a sufficient residence time of the resin composition in the cylinder. Thus, the sea-island structure of this embodiment can be stably formed.

Specifically, as illustrated in the distribution of the elastic modulus in FIG. 2, the sea-island structure of this embodiment includes, for example, a sea phase SP, a first island phase IP1, and a second island phase IP2.

The sea phase SP has an elastic modulus of more than 100 MPa. The sea phase SP is derived from the propylene-based resin. The sea phase SP is spread over the entire elastic modulus distribution.

The first island phase IP1 has an elastic modulus of 100 MPa or less and a size of 0.1 nm or more and 100 nm or less. The "size of the first island phase IP1" used herein refers to a maximum length of a straight line connecting a first end to a second end, which is farthest from the first end, of the first island phase IP1.

The first island phase IP1 is mainly derived from the first styrene-based elastomer, for example. That is, the first island phase IP1 includes at least the styrene units. The styrene units in the first island phase IP1 can be observed with a transmission electron microscope (TEM) by staining a sample taken from the insulating layer 130 with a heavy metal.

The second island phase IP2 has an elastic modulus of 100 MPa or less and a size of more than 100 nm and 2000 nm or less. The method of measuring the "size of the second island phase IP2" referred to here is the same as the method of measuring the "size of the first island phase IP1" mentioned above.

The second island phase IP2 is mainly derived from the second styrene-based elastomer, for example. That is, the second island phase IP2 includes at least the styrene units. The styrene units in the second island phase IP2 can be observed with a TEM in the same manner as described for the first island phase IP1.

The percentage of the total area of the first island phase IP1 and the second island phase IP2 in the unit area in the distribution of the elastic modulus (hereinafter also referred to as "percentage of the total area of the island phases") is, for example, 10% or more and 70% or less. The growth of coarse crystals in the sea phase SP can be suppressed by setting the percentage of the total area of the island phases to 10% or more. Thus, the insulating layer 130 can be flexibilized. On the other hand, by setting the percentage of the total area of the island phases to 70% or less, the insulation of the sea phase SP can be ensured.

The percentage of the area of the first island phase IP1 in the unit area in the distribution of the elastic modulus (hereinafter also referred to as "percentage of the area of the first island phase") is, for example, 1% or more and 40% or less. By setting the percentage of the area of the first island phase to 1% or more, the first island phase IP1 can be sufficiently dispersed in the sea phase SP. Thus, the insulating layer 130 can be flexibilized. On the other hand, by setting the percentage of the total area of the first island phase to 40% or less, the insulation of the sea phase SP can be ensured.

The percentage of the area of the second island phase IP2 in the unit area in the distribution of the elastic modulus (hereinafter also referred to as "percentage of the area of the second island phase") is, for example, 5% or more and 30% or less. By setting the percentage of the area of the second island phase to 5% or more, the growth of coarse crystals in the sea phase SP can be suppressed. On the other hand, by setting the percentage of the total area of the second island phase to 30% or less, the insulation of the sea phase SP can be ensured.

Furthermore, in the sea phase SP, the diameter of an island phase free region (region enclosed by the dashed line in the figure) that is circular and does not contain the first island phase IP1 and the second island phase IP2 is, for example, 5 nm or more and 400 nm or less. Since the diameter of the island phase free region is 5 nm or more, the insulation of the sea phase SP can be ensured. On the other hand, since the diameter of the island phase free region is 400 nm or less, the growth of coarse crystals in the sea phase SP can be suppressed. Thus, the insulating layer 130 can be flexibilized.

### (4) Cable properties

In this embodiment, since the insulating layer 130 has the above-mentioned sea-island structure, it is possible to suppress generation of water trees originating from the minute foreign matters or fine voids in the insulating layer 130 while ensuring the bending resistance of the insulating layer 130.

### (Water Tree Resistance)

The present inventors evaluated the water tree resistance of the insulating layer 130 by performing a water tree test (hereinafter also referred to as a "water needle test") using a water needle that simulates a minute foreign matter or a fine void incorporated in the insulating layer 130.

The "water needle test" referred to here is performed according to the following procedure, as illustrated in FIG. 6.

First, a hexahedral block IB is taken from the insulating layer 130. After the block IB is taken, a flat-plate electrode FE is provided on a first surface S1 of the block IB.

After the flat-plate electrode FE is provided, a void with a needle shape is formed along the normal direction from a second surface S2 opposite to the first surface S1 of the block IB. At this time, a void with a needle shape is formed to have a tip with a radius of curvature of 10 µm at a position opposite to and at a distance d of 1 mm from the first surface S1 of the block IB.

After the void is formed in the block IB, artificial seawater at a salt concentration of 3.8 mass% is injected into the void. Thus, a water needle WN is formed in the block IB.

In the above-mentioned state, an AC voltage of 1000 Hz and 4kV is applied between the flat-plate electrode FE and the tip of the water needle WN for 200 hours.

After the water needle test, a length of a water tree generated at the tip of the water needle WN is measured.

As mentioned above, in the water needle test of this embodiment, the tip of the water needle WN is sharpened to simulate a minute foreign matter or a fine void incorporated in the insulating layer 130. For this reason, a locally high electric field is applied in the vicinity of the tip of the water needle WN. Therefore, in the water needle test of this embodiment, water trees are much more likely to be generated compared to the conventional water tree test in which an electric field is evenly applied to an insulating layer.

In this embodiment, the maximum length of the water tree in the insulating layer 130 generated by the water needle test is, for example, 200 µm or less. That is, even in the above-mentioned test in which a water tree is likely to be generated, the maximum length of the water tree in the insulating layer 130 can be shortened.

### (Insulation After Bending Test)

In this embodiment, since the insulating layer 130 has the above-mentioned sea-island structure, it has resistance to a predetermined bending test.

The "bending test" referred to herein includes, for example, a first step of bending the power cable 10 to have a bending ratio of a bending radius of the power cable 10 to an outer diameter of the insulating layer 130 (hereinafter also referred to simply as a "bending ratio") being 7 or less, and a second step of bending the power cable 10 in a direction opposite to a bending direction in the first step at the same bending ratio as the bending ratio in the first step.

Here, in a bending test according to a normal cable standard, the bending ratio of the bending radius of the power cable to the outer diameter of the insulating layer is set to about 20, for example.

In contrast, the bending ratio in the bending test of this embodiment is smaller than the bending ratio in the bending test according to the normal cable standard. Therefore, a bending stress applied to the insulating layer 130 is increased in the bending test of this embodiment. As a result, defects are more likely to be generated in the insulating layer 130 due to the bending test.

In this embodiment, the AC breakdown electric field strength is maintained at high level even after the bending test mentioned above.

That is, in this embodiment, the AC breakdown electric field strength of the insulating layer 130 at an ordinary temperature (e.g., 25°C) after the above-mentioned bending test is, for example, 50 kv/mm or more, or may be 60 kV/mm or more.

The "AC breakdown electric field strength" used herein is measured by applying a 10 kV AC voltage of a commercial frequency (e.g., 60 Hz) to a sample having a thickness of 0.4 mm at an ordinary temperature (e.g., 25°C) for 10 minutes, and then repeating a cycle including raising the AC voltage by 1 kV increment and applying the raised voltage for 10 minutes.

In this embodiment, the AC breakdown electric field strength of the insulating layer 130 at an ordinary temperature (e.g., 25°C) before the above-mentioned bending test is naturally, for example, 50 kV/mm or more, or 60 kV/mm or more.

### (5) Method of producing power cable

Next, a method of producing the power cable of this embodiment will be described.

The method of producing the power cable of this embodiment includes, for example, a conductor preparation step S120, a resin composition preparation step S140, a cable core formation step 300, a shielding layer formation step S400, and a sheath formation step S500.

### (S120: Conductor Preparation Step)

The conductor 110 formed by twisting a plurality of conductor core wires together is prepared.

### (S140: Resin Composition Preparation Step)

On the other hand, a resin composition containing propylene units and styrene units is prepared.

In this case, the resin composition is mixed to include a sea phase SP having an elastic modulus of more than 100 MPa; a first island phase IP1 having an elastic modulus of 100 MPa or less and a size of 0.1 nm or more and 100 nm or less; and a second island phase IP2 having an elastic modulus of 100 MPa or less and a size of more than 100 nm and 2000 nm or less, in a distribution of the elastic modulus of the resin composition obtained by a micro-region elasticity measurement using an SPM at 25°C.

Specifically, in this embodiment, a propylene-based resin and two styrene-based elastomers as the low crystalline resin are mixed together. That is, a first styrene-based elastomer including propylene units or butene units, and styrene units, and a second styrene-based elastomer including propylene units or butene units, and styrene units, and different from the first styrene-based elastomer, are mixed in the propylene-based resin.

At this time, in this embodiment, when the resin composition includes propylene units, butene units, and styrene units, the propylene-based resin is mixed with the first styrene-based elastomer and the second styrene-based elastomer as the low crystalline resins to yield the content of the butene units in the resin composition of 9 mass% or more and less than 20 mass%.

At this time, in this embodiment, for example, the resin composition is mixed using a biaxial mixer. By using a biaxial mixer, the resin composition can be mixed with a higher shear strength compared to a case using a kneader.

At this time, in this embodiment, for example, the resin composition is mixed at a temperature less than 220°C. When the resin composition is mixed at a temperature of 220°C or more, the viscosity of the resin composition decreases due to high temperature. Therefore, it becomes difficult to apply a predetermined shear strength to the resin composition. In contrast, in this embodiment, the viscosity of the resin composition can be maintained high by setting the mixing temperature to less than 220°C. Thus, a high shear strength can be applied to the resin composition. As a result, the above-mentioned sea-island structure can be stably formed.

At this time, in this embodiment, for example, the installation conditions for the kneading discs in the biaxial mixer are adjusted to adjust the rotation speed of the biaxial mixer. Here, the shear strength in the biaxial mixer can be changed by, for example, changing the kneading disc or the rotation speed. For example, when the kneading discs are placed at more than five locations and each rotation speed is 200 rpm or more, the temperature is likely to rise during mixing. In contrast, in this embodiment, for example, the number of locations where the kneading discs are placed is 2 or more and 5 or less, and each rotation speed is 20 rpm or more and less than 200 rpm. Accordingly, the temperature can be prevented from rising to 220°C or more during mixing. By suppressing the temperature rise, the decrease in viscosity of the resin composition can be suppressed. As a result, high shear strength can be maintained in the biaxial mixer.

At this time, in this embodiment, for example, the filling rate of the resin composition in the cylinder of the biaxial mixer (the ratio of the volume of the resin composition to the cylinder volume) is increased to ensure the residence time of the resin composition in the cylinder. Usually, the filling rate of the resin composition in the cylinder of the biaxial mixer is set to 20% or less to decrease a load on equipment (torque applied to a screw) and ensure a discharge rate. In contrast, in this embodiment, a residence time of the resin composition in the cylinder can be sufficiently ensured by setting the filling rate of the resin composition into the cylinder of the biaxial mixer to more than 20%. Accordingly, the above-mentioned sea-island structure can be stably formed.

As described above, in this embodiment, the above-mentioned sea-island structure can be formed in the resin composition.

After the resin composition is mixed, the resin composition is granulated using an extruder. As a result, a pellet-like resin composition that is to form the insulating layer 130 is formed. Note that the steps from mixing to granulation may be collectively performed.

### (S300: Cable Core Formation Step (Extrusion Step, Insulating Layer Formation Step))

After the conductor preparation step S120 and the resin composition preparation step S140 are completed, the insulating layer 130 is formed using the above-mentioned resin composition to cover the outer circumference of the conductor 110.

At this time, in this embodiment, by extrusion molding the insulating layer 130 using the above-mentioned resin composition, the above-mentioned sea-island structure is also formed in the insulating layer 130.

At this time, in this embodiment, the internal semiconductive layer 120, the insulating layer 130, and the external semiconductive layer 140 are formed simultaneously using a three-layer co-extruder, for example.

Specifically, for example, a resin composition for the internal semiconductive layer is charged into an extruder A of the three-layer co-extruder, the extruder A forming the internal semiconductive layer 120.

The pellet-like resin composition described above is charged into an extruder B forming the insulating layer 130. The set temperature of the extruder B is set to a temperature higher than the desired melting point by 10°C or more and 50°C or less, for example. The set temperature is adjusted appropriately based on the linear velocity and extrusion pressure.

A resin composition for the external semiconductive layer is charged into an extruder C forming the external semiconductive layer 140, the rein composition including materials similar to those of the resin composition for the internal semiconductive layer charged into the extruder A.

Then, the respective extrudates from the extruders A to C are guided to a common head, and the internal semiconductive layer 120, the insulating layer 130, and the external semiconductive layer 140, outwardly from the inside, are simultaneously extruded on the outer circumference of the conductor 110. Accordingly, an extruded material that is to be a cable core is formed.

The extruded material is then cooled, for example, with water.

The cable core that is composed of the conductor 110, the internal semiconductive layer 120, the insulating layer 130, and the external semiconductive layer 140 is formed through the cable core formation step S300 described above.

### (S400: Shielding Layer Formation Step)

After the cable core is formed, the shielding layer 150 is formed outside the external semiconductive layer 140, for example, by winding a copper tape therearound.

### (S500: Sheath Formation Step)

After the shielding layer 150 is formed, vinyl chloride is charged into an extruder, and extruded from the extruder to form a sheath 160 on the outer circumference of the shielding layer 150.

As described above, the power cable 10 as the solid insulation power cable is produced.

### (6) Summary of this embodiment

According to this embodiment, one or more effects described below are achieved.
(a) In this embodiment, the insulating layer 130 includes a sea phase SP having an elastic modulus of more than 100 MPa; a first island phase IP1 having an elastic modulus of 100 MPa or less and a size of 0.1 nm or more and 100 nm or less; and a second island phase IP2 having an elastic modulus of 100 MPa or less and a size of more than 100 nm and 2000 nm or less, in a distribution of the elastic modulus of the insulating layer 130 obtained by a micro-region elasticity measurement using an SPM at 25°C.

By dispersing the first island phase IP1 that is flexible and small in the sea phase SP including the propylene-based resin, the propylene-based resin can be efficiently flexibilized, and the flexibility of the insulating layer 130 as a whole can be obtained. Thus, even when bending stress is applied to the insulating layer 130 at the time of bending a power cable 10, cracks and the like in the sea phase SP can be suppressed. As a result, even when the power cable 10 is bent, the insulation of the insulating layer 130 can be ensured.

In this state, by further dispersing the second island phase IP2 that is flexible and large in the sea phase SP including the propylene-based resin, the propagation of water trees can be stopped within the second island phase IP2 even when the water trees originating from minute foreign matters or fine voids are generated. As a result, the extreme propagation of the water trees originating from the minute foreign matters or fine voids in the insulating layer 130 can be suppressed.

As described above, according to this embodiment, the generation of the water trees originating from the minute foreign matters or fine voids in the insulating layer 130 can be suppressed while ensuring the bending resistance of the insulating layer 130.

(b) In this embodiment, in a water needle test simulating minute foreign matters or fine voids incorporated in the insulating layer 130, the maximum length of the water trees in the insulating layer 130 is 200 µm or less. That is, even in a test in which water trees are likely to be generated, the maximum length of the water trees in the insulating layer 130 can be shortened. As a result, even when the minute foreign matters or fine voids get mixed in the insulating layer 130, extreme propagation of the water trees can be suppressed.

(c) In this embodiment, after the bending test with a bending ratio of 7 or less, the AC breakdown electric field strength of the insulating layer 130 at an ordinary temperature (e.g., 25°C) is 50 kV/mm or more. That is, even in a test in which a bending stress greater than the bending stress in a bending test according to a normal cable standard is applied to the insulating layer 130, the AC breakdown electric field strength can be maintained high. As a result, even when the actual power cable 10 is bent, the insulation of the insulating layer 130 can be maintained high.

### <Other Embodiments of Disclosure>

Although embodiments of the present disclosure have been described in detail above, the present disclosure is not limited to the above-described embodiments, and various modifications can be made without departing from the gist thereof.

In the above-described embodiment, an explanation is given for a case where the power cable 10 may have no water shielding layer, but the present disclosure is not limited to the case. The power cable 10 may have a simple water shielding layer. Specifically, the simple water shielding layer is composed of, for example, a metallic laminated tape. The metallic laminated tape includes a metallic layer composed of aluminum or copper, and an adhesive layer provided on one or both sides of the metallic layer, for example. The metallic laminated tape is wrapped longitudinally around the outer circumference of a cable core (outer circumference outward of the external semiconductive layer) to surround the cable core, for example. Note that this water shielding layer may be provided outside the shielding layer, or may also serve as the shielding layer. This configuration can reduce the cost of the power cable 10.

In the above-described embodiments, an explanation is given for a case where the power cable 10 is configured to be laid on the ground, under water, or at the bottom of water, but the present disclosure is not limited to the case. For example, the power cable 10 may be configured as a so-called overhead wire (overhead insulated wire).

In the above-described embodiment, three layers are extruded simultaneously in the cable core formation step S300, but they may be individually extruded.

### [Examples]

Next, examples according to the present disclosure will be described. These examples are illustrative of the present disclosure, and the present disclosure is not limited by these examples.

### (1) Production of power cable

Power cables of Samples A1 to A3 and B1 to B8 were produced according to the following procedures.

### (1-1) Material preparation step

The following materials were prepared as resin components for each sample.

### (Propylene-based Resin)

### •Random polypropylene (r-PP):

Tacticity: isotactic
Ethylene unit content: 3 mass%
MFR: 1.3 g/10 min (230°C, 2.16 kg)
Density: 0.9 g/ml
Melting point: 145°C
Heat of fusion: 100 J/g

### (Low Crystalline Resin)

### •Hydrogenated styrene-butadiene-styrene block copolymer (SEBS1):

Butene unit content: 65 mass%
Styrene unit content: 5 mass%
MFR: 6.0 g/10 min (230°C, 2.16 kg)
Hardness: A45
Melting point : No
Heat of fusion: No

### •Hydrogenated styrene-butadiene-styrene block copolymer (SEBS2):

Butene unit content: 25 mass%,
Styrene unit content: 30 mass%
MFR: 5.0 g/10 min (230°C, 2.16 kg)
Hardness: A84
Melting point: No
Heat of fusion: No

### •Hydrogenated styrene-butadiene-styrene block copolymer (SEBS3):

Butene unit content: 65 mass%,
Styrene unit content: 12 mass%
MFR: 4.5 g/10 min (230°C, 2.16 kg)
Hardness: A42
Melting point: No
Heat of fusion: No

### •Very low density polyethylene (VLDPE):

Ethylene-1-butene copolymer
Butene unit content: 21 mass%
MFR: 6.7 g/10 min (230°C, 2.16 kg)
Hardness: A86
Melting point: 66°C
Heat of fusion: 10 J/g

### (1-2) Resin composition mixing step

Using the material mentioned above, the resin composition of each sample was mixed.

### (Samples A1 to A3)

In Samples A1 to A3, r-PP, SEBS1, and SEBS2 were mixed to yield respective contents of monomer units shown in Table 1 below. At this time, the resin was mixed at a temperature of 200°C using a biaxial mixer. The kneading discs were placed at three locations, and each rotation speed was set to 100 rpm, and the filling rate of the resin composition in the cylinder was set to 50%. This method is hereinafter also referred to as a "new mixing method".

### (Samples B1 to B7)

For Samples B1 to B7, the resin compositions were mixed in the same manner as for Sample A1, except that the low crystalline resin used and respective contents of monomer units were different.

### (Sample B8)

For Sample B8, the resin composition was mixed in the same manner as for Sample A1, except that the mixing method was different. For Sample B8, a kneader was used to mix the resin composition at a temperature of 220°C.

### (1-3) Post-process

The resin composition was mixed as described above. On the other hand, a conductor having a cross-sectional area of 200 mm² was prepared, which was formed by twisting together a conductor core wire made of a dilute copper alloy having a diameter of 17 mm. After the conductor was prepared, a resin composition for an internal semiconductive layer containing ethylene-ethyl acrylate copolymer, the above-described resin composition, and a resin composition for an external semiconductive layer made of the same material as the resin composition for an internal semiconductive layer were respectively introduced into the extruders A to C. The respective extrudates from the extruders A to C were guided to a common head, and the internal semiconductive layer, the insulating layer, and the external semiconductive layer, outwardly from the inside, were simultaneously extruded on the outer circumference of the conductor. At this time, the thicknesses of the internal semiconductive layer, the insulating layer, and the external semiconductive layer were 0.5 mm, 3.5 mm, and 0.5 mm, respectively. After the extrusion step, an extrudate was cooled. As a result, a power cable was produced for each of Samples A1 to A3 and B1 to B8.

### (2) Evaluation

The following evaluations were performed for each sample.

### (NMR)

A portion of the insulating layer of each of the above-described samples was dissolved in orthochlorobenzene. In this state, analysis was performed in an environment at a temperature of 130°C using an NMR system manufactured by JEOL Ltd. The composition ratio of the monomer units was calculated from the peak area ratio obtained from ¹H-NMR and ¹³C-NMR.

### (SPM)

An SPM was used to perform the micro-region elasticity measurement. In the measurement, a sheet having a thickness of 1 mm cut out f from a central portion in the thickness direction of the insulating layer of each sample was used. In the micro-region elasticity measurement, the elastic modulus was measured under conditions of tapping within a 1 µm square area of the sample 16000 times at 25°C with a cantilever having a tip that is made of silicon (single crystal) and has a radius of curvature of 7 nm.

In the micro-region elasticity measurement, the distribution of the elastic modulus with an elastic modulus threshold of 200 MPa and the distribution of the elastic modulus with an elastic modulus threshold of 100 MPa were obtained. For each distribution of the elastic modulus, the field of view was 1.0 µm square.

In the distribution of the elastic modulus with a threshold elastic modulus of 200 MPa, a phase structure in which each phase is continuous without being separated is determined as a "co-continuous structure (B1)", and a phase structure in which each phase is separated is determined as a "sea-island structure".

When a phase structure was determined to be "sea-island structure", the size of the island phase was measured in the distribution of the elastic modulus with the elastic modulus threshold set at 100 MPa. As a result, the sea-island structure with a first island phase having an elastic modulus of 100 MPa or less and a size of 0.1 nm or more and 100 nm or less, and a second island phase having an elastic modulus of 100 MPa or less and a size of more than 100 nm and 2000 nm or less was rated "A" as the phase structure of the present disclosure. The sea-island structure with only the first island phase was rated as "B2". The sea-island structure with only the second island phase was rated as "B3".

### (Water Needle Test)

As illustrated in FIG. 6, for each sample, a block was taken from the insulating layer and the water needle test mentioned above was performed.

The conditions for the water needle test were set as follows.
Radius of curvature of tip of water needle: 10 µm
Distance from flat-plate electrode on first surface of block to tip of water needle: 1 mm
Salt concentration in artificial seawater inside water needle: 3.8 mass%
Frequency : 1000 MHz
AC voltage: 4 kV

After the water needle test, the block was dried and then stained by boiling the block in an aqueous solution of methylene blue. Once the block was stained, the area of the block near the tip of the water needle was sliced to form a slice for observation. After that, the slice for observation was observed with an optical microscope, and the water tree generated near the tip of the water needle was observed.

At this time, the maximum length of the water tree generated in the slice for observation was measured. The "maximum length of water tree" was determined by rounding off the length of the longest water tree in 10 blocks randomly selected from the insulating layer of each sample.

As a result, a case where the maximum length of the water tree is 200 µm or less is evaluated as good (A). A case where the maximum length of the water tree is more than 200 µm is evaluated as poor (B).

### (Evaluation of Insulation)

### (i) Evaluation of insulation immediately after production

Immediately after the power cable was produced, a sheet was taken from the insulating layer of each sample. The thickness of the sheet was 0.4 mm.

At an ordinary temperature (25°C), the sheet of the insulating layer was subjected to a commercial frequency (e.g., 60 Hz) AC voltage under conditions of applying a voltage of 10 kV for 10 minutes, then repeating a cycle including raising the voltage by 1 kV increment and applying the raised voltage for 10 minutes. The electric field strength when the sheet of the insulating layer underwent dielectric breakdown was measured. As a result, a case where the AC breakdown strength is 50 kV/mm or more is evaluated as good (A), and a case where the AC breakdown strength is less than 50 kV/mm is evaluated as poor.

### (ii) Evaluation of insulation after bending test

### (7D Bending test)

First, for the power cable of each sample, bending test was performed.

In the first step of the bending test, the power cable with an outer diameter of 26 mm was pressed along a half circumference of a ring made of SUS with a radius of 180 mm. That is, the power cable was bent to yield a bending ratio of the bending radius of the power cable to the outer diameter of the insulating layer (outer diameter of the power cable) being 7 or less. Thereafter, in the second step, the power cable was bent in a direction opposite to the bending direction in the first step at the same bending ratio as the bending ratio in the first step.

### (Sampling and AC breakdown test )

From the power cable of each sample after the bending test, a sheet of the insulating layer was taken, in the same manner as in the above-mentioned evaluation immediately after production. On the sheet of the insulating layer taken after the bending test, the AC breakdown test was performed, in the same manner as in the above-mentioned evaluation immediately after production.

### (3) Results

With reference to the following Table 1 and FIG.2 to FIG. 5, the evaluation results of each sample will be described.

**[Table 1]**

| Sample | | A1 | A2 | A3 | B1 | B2 | B3 | B4 | B5 | B6 | B7 | B8 |
|---|---|---|---|---|---|---|---|---|---|---|---|---|
| r-PP | | Included | Included | Included | Included | Included | Included | Included | Included | Included | Included | Included |
| SEBS1 | | Included | Included | Included | Included | Included | | | | Included | | Included |
| SEBS2 | | Included | Included | Included | | | Included | Included | | | | Included |
| SEBS3 | | | | | | | | | Included | Included | | |
| VLDPE | | | | | | | | | | | Included | |
| Monomer unit (mass%) | Propylene unit | 67 | 57 | 57 | 66 | 76 | 76 | 66 | 66 | 67 | 67 | 67 |
| | Ethylene unit | 13 | 18 | 19 | 12 | 9 | 13 | 17 | 10 | 11 | 27 | 13 |
| | Butene unit | 16 | 17 | 14 | 20 | 14 | 5 | 8 | 20 | 20 | 6 | 16 |
| | Styrene unit | 4 | 8 | 10 | 2 | 1 | 6 | 9 | 4 | 2 | | 4 |
| Mixer | | Biaxial mixer | Biaxial mixer | Biaxial mixer | Biaxial mixer | Biaxial mixer | Biaxial mixer | Biaxial mixer | Biaxial mixer | Biaxial mixer | Biaxial mixer | Kneader |
| Mixing temperature | | 200°C | 200°C | 200°C | 200°C | 200°C | 200°C | 200°C | 200°C | 200°C | 200°C | 220°C |
| Phase structure | | Sea-island | Sea-island | Sea-island | Co-continuous | Sea-island | Sea-island | Sea-island | Co-continuous | Co-continuous | Sea-island | Sea-island |
| | | A | A | A | B1 | B2 | B3 | B3 | B1 | B1 | B3 | B3 |
| Size of island phase ≤100MPa at 25°C | 0.1 to 100 nm | A | A | A | - | A | B | B | - | - | B | B |
| | 200 to 2000 nm | A | A | A | | B | A | A | | | A | A |
| AC Breakdown electric field strength (kV/mm) | Immediately after production | 69 | 66 | 68 | 77 | 79 | 85 | 88 | 75 | 80 | 69 | 70 |
| | | A | A | A | A | A | A | A | A | A | A | A |
| | After 7D bending test | 73 | 67 | 66 | 77 | 74 | 12 | 17 | 77 | 76 | 26 | 33 |
| | | A | A | A | A | A | B | B | A | A | B | B |
| Length (µm) of water tree in water needle test | | 140 | 133 | 124 | 381 | 205 | 24 | 123 | 554 | 608 | 140 | 122 |
| | | A | A | A | B | B | A | A | B | B | A | A |

As a result of the above-mentioned NMR analysis, it was confirmed that each of the samples satisfied respective contents of monomer units shown in Table 1. Other evaluation results for each sample will be explained below.

### (Samples B1, B5, and B6)

For Samples B1 and B5, a content of the butene units in the insulating layer was 20 mass% or more. For Sample B6, the resin composition contained no styrene units, and the content of the butene units was 20 mass% or more.

Therefore, as shown in the distribution of the elastic modulus in FIG. 3, in Samples B1, B5, and B6, the phase structure of the insulating layer was a co-continuous structure B1.

As a result, for Samples B1, B5, and B6, the AC breakdown electric field strength after the bending test was 50 kV/mm or more. However, for Samples B1, B5, and B6, the maximum length of the water tree in the water needle test was more than 200 µm.

For Samples B1, B5, and B6, it is considered that since the phase structure of the insulating layer was the co-continuous structure B1, when water trees were generated during the water needle test, the water trees propagated along the flexible phase in the co-continuous structure.

### (Sample B2)

For Sample B2, the insulating layer included only SEBS1 with high content of the butene units as the low crystalline resin and the content of the butene units in the insulating layer 130 was less than 20 mass%.

Therefore, as illustrated in the distribution of the elastic modulus in FIG. 4, for Sample B2, the phase structure of the insulating layer was a sea-island structure B2 having the small first island phase but no large second island phase.

As a result, for Sample B2, the AC breakdown electric field strength after the bending test was 50 kV/mm or more. However, for Sample B2, the maximum length of the water tree was more than 200 µm in the water needle test.

For Sample B2, since the phase structure of the insulating layer was a sea-island structure B2 having only small first island phase, coarse crystals grew in the sea phase. Therefore, it is considered that when water trees were generated in the water needle test, the water trees propagated at the interfaces of the coarse crystals.

### (Samples B3 and B4)

For Samples B3 and B4, the insulating layer included only SEBS2 with low content of the butene units as the low crystalline resin and the content of the butene units in the insulating layer was less than 9 mass%.

Therefore, as illustrated in the distribution of the elastic modulus in FIG. 5, for Samples B3 and B4, the phase structure of the insulating layer was a sea-island structure B3 having the large second island phase but no small first island phase.

As a result, for Samples B3 and B4, the maximum length of the water tree in the water needle test was 200 µm or less. However, for Samples B3 and B4, the AC breakdown electric field strength after the bending test was less than 50 kV/mm.

For Samples B3 and B4, it is considered that cracks occurred in the sea phase during the bending test, and therefore the insulation was degraded after the bending test.

### (Sample B7)

For Sample B7, the insulating layer included only VLDPE without styrene units as the low crystalline resin.

Therefore, for Sample B7, the phase structure was the sea-island structure B3 having only large island phase, similarly to Samples B3 and B4.

As a result, for Sample B7, cracks and the like occurred in the sea phase, similarly to Samples B3 and B4, and therefore the AC breakdown electric field strength after the bending test was less than 50 kV/mm.

### (Sample B8)

For Sample B8, the composition of the monomer units in the insulating layer was the same as that in Sample A1, but the novel mixing method described above was not applied.

Therefore, for Sample B8, the phase structure of the insulating layer was the sea-island structure B3 having only large island phase, similarly to Samples B3 and B4.

As a result, for Sample B8, the maximum length of the water tree in the water needle test was 200 µm or less. However, for Sample B8, the AC breakdown electric field strength after the bending test was less than 50 kV/mm.

For Sample B8, since the novel mixing method was not applied, the shear strength during mixing was insufficient and the resin composition was not mixed sufficiently. Therefore, for Sample B8, the sea-island structure A as in Sample A1 was not formed. As a result, cracks and the like occurred during the bending test, which is supposed to degrade the insulation after the bending test.

### (Samples A1 to A3)

For Samples A1 to A3, the insulating layer included SEBS1 and SEBS2 as the low crystalline resins. For Samples A1 to A3, the content of the butene units in the insulating layer was 9 mass% or more and less than 20 mass%. In addition, for Samples A1 to A3, the new mixing method was applied.

Therefore, as illustrated in FIG. 2, for Samples A1 to A3, the phase structure of the insulating layer was a sea-island structure A having the small first island phase and the large second island phase.

As a result, for Samples A1 to A3, the AC breakdown electric field strengths after the bending test was 50 kV/mm or more. In addition, for Samples A1 to A3, the maximum length of the water tree in the water needle test was 200 µm or less.

For Samples A1 to A3, since the phase structure of the insulating layer was the sea-island structure A having the small first island phase and the large second island phase, it is confirmed that the insulation of the insulating layer can be ensured even when the power cable is bent.

In addition, since the phase structure of the insulating layer was the sea-island structure A having the small first island phase and the large second island phase, it is confirmed that the extreme propagation of the water tree originating from the tip of the water needle which simulates the minute foreign matter or fine void can be suppressed in the insulating layer.

### <Supplementary descriptions>

Hereinafter, supplementary descriptions of the aspects of the present disclosure will be given.

### (Supplementary description 1)

A resin composition forming an insulating layer of a power cable,
the resin composition including propylene units and styrene units,
wherein in a distribution of elastic modulus of the resin composition obtained by a micro-region elasticity measurement using a scanning probe microscope at 25°C, the resin composition includes:
a sea phase having an elastic modulus of more than 100 MPa;
a first island phase having an elastic modulus of 100 MPa or less and a size of 0.1 nm or more and 100 nm or less; and
a second island phase having an elastic modulus of 100 MPa or less and a size of more than 100 nm and 2000 nm or less.

### (Supplementary description 2)

A power cable including:
a conductor; and
an insulating layer provided to cover an outer circumference of the conductor,
the insulating layer including propylene units and styrene units,
wherein in a distribution of elastic modulus of the insulating layer obtained by a micro-region elasticity measurement using a scanning probe microscope at 25°C, the insulating layer incudes:
a sea phase having an elastic modulus of more than 100 MPa;
a first island phase having an elastic modulus of 100 MPa or less and a size of 0.1 nm or more and 100 nm or less; and
a second island phase having an elastic modulus of 100 MPa or less and a size of more than 100 nm and 2000 nm or less..

### (Supplementary description 3)

The power cable according to supplementary description 2,
wherein a maximum length of water tree in the insulating layer generated by a water needle test is 200 µm or less,
the water needle test including:
   providing a flat-plate electrode on a first surface of a block taken from the insulating layer;
   forming a void with a needle shape to have a tip with a radius of curvature of 10 µm at a position opposite to and at a distance of 1 mm from the first surface;
   forming a water needle in the block by injecting artificial seawater at a salt concentration of 3.8 mass% into the void; and
   applying an AC voltage of 1000 Hz and 4 kV between the flat-plate electrode and the tip of the water needle for 200 hours.

### (Supplementary description 4)

The power cable according to supplementary description 2 or 3,
wherein an AC breakdown electric field strength in the insulating layer is 50 kV/mm or more at 25°C after a bending test as predetermined,
the bending test including:
a first step of bending the power cable to yield a bending ratio of a bending radius of the power cable relative to an outer diameter of the insulating layer being 7 or less; and
a second step of bending the power cable in a direction opposite to a bending direction in the first step at the same bending ratio as the bending ratio in the first step.

### (Supplementary description 5)

The power cable according to any one of supplementary descriptions 2 to 4,
wherein the insulating layer further includes butene units, and
a content of the butene units in the insulating layer is 9 mass% or more and less than 20 mass%.

### (Supplementary description 6)

The power cable according to any one of supplementary descriptions 2 to 5,
wherein the first island phase and the second island phase include at least the styrene units.

### (Supplementary description 7)

The power cable according to any one of supplementary descriptions 2 to 6,
wherein the insulating layer includes:
a propylene-based resin;
a first styrene-based elastomer including propylene units or butene units, and styrene units; and
a second styrene-based elastomer including propylene units or butene units, and styrene units, and different from the first styrene-based elastomer.

### (Supplementary description 8)

The power cable according to supplementary description 7,
wherein a content of the propylene units or the butene units in the second styrene-based elastomer is less than a content of the propylene units or the butene units in the first styrene-based elastomer.

### (Supplementary description 9)

The power cable according to supplementary description 7 or 8,
wherein a content of the styrene units in the second styrene-based elastomer is more than a content of the styrene units in the first styrene-based elastomer.

### (Supplementary description 10)

A method of producing a power cable, including:
preparing a resin composition including propylene units and styrene units; and
forming an insulating layer to cover an outer circumference of the conductor with the resin composition,
wherein in the preparation of the resin composition, the resin composition is mixed to include a sea phase having an elastic modulus of more than 100 MPa; a first island phase having an elastic modulus of 100 MPa or less and a size of 0.1 nm or more and 100 nm or less; and a second island phase having an elastic modulus of 100 MPa or less and a size of more than 100 nm and 2000 nm or less, in a distribution of elastic modulus of the resin composition obtained by a micro-region elasticity measurement using a scanning probe microscope at 25°C.

### [Reference Signs List]

- 10: Power cable
- 110: Conductor
- 120: Internal semiconductive layer
- 130: Insulating layer
- 140: External semiconductive layer
- 150: Shielding layer
- 160: Sheath

## Claims

1. A resin composition forming an insulating layer of a power cable,
the resin composition including propylene units and styrene units,
wherein in a distribution of elastic modulus of the resin composition obtained by a micro-region elasticity measurement using a scanning probe microscope at 25°C, the resin composition comprises:
a sea phase having an elastic modulus of more than 100 MPa;
a first island phase having an elastic modulus of 100 MPa or less and a size of 0.1 nm or more and 100 nm or less; and
a second island phase having an elastic modulus of 100 MPa or less and a size of more than 100 nm and 2000 nm or less.

2. A power cable comprising:
a conductor; and
an insulating layer provided to cover an outer circumference of the conductor,
the insulating layer including propylene units and styrene units,
wherein in a distribution of elastic modulus of the insulating layer obtained by a micro-region elasticity measurement using a scanning probe microscope at 25°C, the insulating layer comprises:
a sea phase having an elastic modulus of more than 100 MPa;
a first island phase having an elastic modulus of 100 MPa or less and a size of 0.1 nm or more and 100 nm or less; and
a second island phase having an elastic modulus of 100 MPa or less and a size of more than 100 nm and 2000 nm or less.

3. The power cable according to claim 2,
wherein a maximum length of water tree in the insulating layer generated by a water needle test is 200 µm or less,
the water needle test comprising:
providing a flat-plate electrode on a first surface of a block taken from the insulating layer;
forming a void with a needle shape to have a tip with a radius of curvature of 10 µm at a position opposite to and at a distance of 1 mm from the first surface;
forming a water needle in the block by injecting artificial seawater at a salt concentration of 3.8 mass% into the void; and
applying an AC voltage of 1000 Hz and 4 kV between the flat-plate electrode and the tip of the water needle for 200 hours.

4. The power cable according to any one of claim 2 or 3,
wherein an AC breakdown electric field strength in the insulating layer is 50 kV/mm or more at 25°C after a bending test as predetermined,
the bending test comprising:
a first step of bending the power cable to yield a bending ratio of a bending radius of the power cable relative to an outer diameter of the insulating layer being 7 or less; and
a second step of bending the power cable in a direction opposite to a bending direction in the first step at the same bending ratio as the bending ratio in the first step.

5. The power cable according to any one of claims 2 to 4,
wherein the insulating layer further includes butene units, and
a content of the butene units in the insulating layer is 9 mass% or more and less than 20 mass%.

6. The power cable according to any one of claims 2 to 5,
wherein the insulating layer comprises:
a propylene-based resin;
a first styrene-based elastomer including propylene units or butene units, and styrene units; and
a second styrene-based elastomer including propylene units or butene units, and styrene units, and different from the first styrene-based elastomer.
